# EUROPEAN PATENT SPECIFICATION

(11) **EP 2 374 822 B1**
(45) Date of publication and mention of the grant of the patent: **15.10.2014**
(21) Application number: 09832130.0
(22) Date of filing: 10.12.2009
(51) Int. Cl.: C08F 210/16, C08F 110/02, C08F 4/659, C08F 4/6592

(54) **HYBRID SUPPORTED METALLOCENE CATALYST, METHOD FOR PREPARING THE SAME, AND METHOD FOR PREPARING POLYOLEFIN POLYMERS USING SAME**
GESTÜTZER HYBRIDMETALLOCEN-KATALYSATOR, HERSTELLUNGSVERFAHREN DAFÜR UND VERFAHREN ZUR HERSTELLUNG VON POLYOLEFINPOLYMEREN DAMIT
CATALYSEUR MÉTALLOCÈNE MIXTE SUR SUPPORT, SON PROCÉDÉ DE PRÉPARATION, ET MÉTHODE DE PRÉPARATION DE POLYMÈRES DE POLYOLÉFINE UTILISANT CE CATALYSEUR

(30) Priority: 11.12.2008 KR 20080125604
(43) Date of publication of application: 12.10.2011
(73) Proprietor: LG Chem, Ltd., Youngdungpo-gu Seoul 150-721 (KR)
(72) Inventor: HONG, Dae-Sik, Gunpo-si Gyeonggi-do 435-055 (KR); LEE, Ki-Soo, Daejeon 305-509 (KR); CHO, Joon-Hee, Daejeon 305-340 (KR); SONG, Eun-Kyoung, Daejeon 302-781 (KR); LEE, Yong-Ho, Incheon 400-101 (KR); LEE, Byung-Ryul, Daejeon 305-340 (KR); KIM, Seon-Kyoung, Yongin-si Gyeonggi-do 448-760 (KR)
(74) Representative: Goddar, Heinz J.
(86) International application number: PCT/KR2009/007377
(87) International publication number: WO 2010/068045

(56) References cited:
- WO-A1-2008/136621
- KR-A- 20080 058 033
- KR-A- 20080 097 949
- KR-A- 20080 097 949
- KR-B1- 100 235 180

## Description

### [Technical Field]

The present invention relates to a method for preparing a hybrid supported metallocene catalyst, and a method for preparing an olefin-based polymer using the same. This application claims priority from Korean Patent Application No. 10-2008-0125604 filed on December 11, 2008 in the Korean Intellectual Property Office (KIPO), the disclosure of which is incorporated herein by reference in its entirety.

### [Background Art]

Olefin polymerization catalyst systems can be divided into Ziegler-Natta and metallocene catalysts, and these highly active catalyst systems have been developed in accordance with their characteristics. The Ziegler-Natta catalyst has been widely applied to commercial processes since it was developed in the 1950's. However, since the Ziegler-Natta catalyst is a multi-active site catalyst, it did not provide polymers of which molecular weight distribution is narrow. Also, since compositional distribution of comonomers is not uniform, it is difficult to provide the desired physical properties.

Meanwhile, the metallocene catalyst system comprises a main catalyst whose main component is a transition metal compound and an organometallic compound cocatalyst whose main component is aluminum. Such a catalyst is a homogeneous single-site catalyst, and offers a polymer having a narrow molecular weight distribution and uniform compositional distribution of comonomers, depending on the single site characteristics. The stereoregularity, copolymerization characteristics, molecular weight, crystallinity, and so forth of the obtained polymer can be controlled by changing the ligand structure of the catalyst and the polymerization condition.

US Pat. No. 5,032,562 describes a method of preparing a polymerization catalyst by supporting two different transition metal catalysts on one support. This catalyst is prepared by supporting a Ti-based Ziegler-Natta catalyst which produces a high molecular weight polymer and a Zr-based metallocene catalyst which produces a low molecular weight polymer on one support and results in a bimodal molecular weight distribution. The supporting procedure is complicated and morphology of polymers is poor due to a cocatalyst.

US Pat. No. 5,525,678 discloses a catalyst system for polymerization of olefins in which a metallocene compound and a non-metallocene compound are simultaneously supported on a support to simultaneously polymerize a high molecular weight polymer and a low molecular weight polymer. However, the metallocene compound and non-metallocene compound must be separately supported and the support must be pretreated with various compounds for supporting.

US Pat. No. 5,914,289 describes a method of controlling the molecular weight and the molecular weight distribution of polymers using metallocene catalysts which are respectively supported on supports. A large amount of solvent and long time are required to prepare the supported catalysts and the process of supporting metallocene catalysts on the respective support is troublesome.

Korean Patent Application No. 2003-12308 discloses a method of controlling the molecular weight distribution of polymers by polymerizing while changing a combination of catalysts in a reactor by supporting a dinuclear metallocene catalyst and a mononuclear metallocene catalyst on a support with an activating agent. However, this method is limited in simultaneous implementation of properties of the respective catalysts. In addition, a metallocene catalyst portion is departed from a supported catalyst to cause fouling in the reactor.

Therefore, to solve the above drawbacks, there is a need to develop a method for preparing polyolefins with the desired physical properties by easily preparing a hybrid supported metallocene catalyst having an excellent activity.

### [Description of the Invention]

### [Technical Objective]

To solve the above problems in the prior arts, the present invention provides a hybrid supported metallocene catalyst which has an excellent activity and is able to prepare an olefin-based polymer with a high molecular weight and desired physical properties, a method for preparing the same, and a method for preparing an olefin-based polymer using the same.

### [Technical Solution]

The present invention provides a hybrid supported metallocene catalyst comprising a metallocene compound represented by the following Formula 1, a metallocene compound represented by the following Formula 2, a co-catalyst compound, and a support.

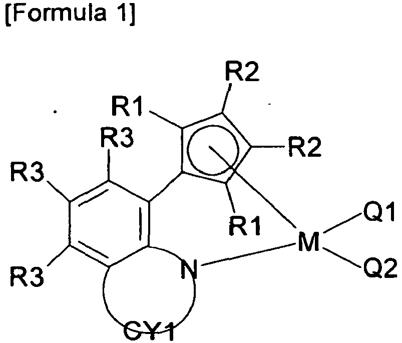

WhereinR1 and R2 are the same as or different from each other, and are each independently hydrogen; an alkyl radical having 1 to 20 carbon atoms; an alkenyl radical having 2 to 20 carbon atoms; an aryl radical having 6 to 20 carbon atoms; a silyl radical; an alkylaryl radical having 7 to 20 carbon atoms; an arylalkyl radical having 7 to 20 carbon atoms; or a metalloid radical of Group 4 substituted with hydrocarbyl group; R1 and R2 or two R2s may be connected to each other by an alkylidene radical containing an alkyl radical having 1 to 20 carbon atoms or aryl radical having 6 to 20 carbon atoms to form a ring,

R3s are the same as or different from each other, and are each independently hydrogen; a halogen radical; an alkyl radical having 1 to 20 carbon atoms; an aryl radical having 6 to 20 carbon atoms; an alkoxy radical having 1 to 20 carbon atoms; an aryloxy radical having 6 to 20 carbon atoms; or amido radical; and two or more of R3 may be connected to each other to form an aliphatic or aromatic ring;

CY1 is a substituted or unsubstituted aliphatic or aromatic ring, in which CY1 may be substituted with a halogen radical; an alkyl radical having 1 to 20 carbon atoms; an alkenyl radical having 2 to 20 carbon atoms; an aryl radical having 6 to 20 carbon atoms; an alkylaryl radical having 7 to 20 carbon atoms; an arylalkyl radical having 7 to 20 carbon atoms; an alkoxy radical having 1 to 20 carbon atoms; an aryloxy radical having 6 to 20 carbon atoms; or an amido radical, and in the case where CY1 is substituted with the plural substituents, two or more substituents may be connected to each other to form an aliphatic or aromatic ring;
M is a Group 4 transition metal;
Q1 and Q2 are the same as or different from each other, and are each independently a halogen radical; an alkyl radical having 1 to 20 carbon atoms; an alkenyl radical having 2 to 20 carbon atoms; an aryl radical having 6 to 20 carbon atoms; an alkylaryl radical having 7 to 20 carbon atoms; an arylalkyl radical having 7 to 20 carbon atoms; an alkyl amido radical having 1 to 20 carbon atoms; an aryl amido radical having 6 to 20 carbon atoms; or an alkylidene radical having 1 to 20 carbon atoms,

[Formula 2] (CpR)ₙ(Cp'R')MQ₃₋ₙ

wherein M is a Group 4 transition metal;
Cp and Cp' are the same as or different from each other, and are each independently any one selected from the group consisting of cyclopentadienyl, indenyl, 4,5,6,7-tetrahydro-1-indenyl, and fluorenyl radicals, in which they may be substituted with hydrocarbon having 1 to 20 carbon atoms;
R and R' are the same as or different from each other, and are each independently hydrogen; alkyl having 1 to 20 carbon atoms; alkoxy having 1 to 10 carbon atoms; aryl having 6 to 20 carbon atoms; aryloxy having 6 to 10 carbon atoms; alkenyl having 2 to 20 carbon atoms; alkylaryl having 7 to 40 carbon atoms; arylalkyl having 7 to 40 carbon atoms; arylalkenyl having 8 to 40 carbon atoms; or alkynyl having 2 to 10 carbon atoms;
Q is a halogen atom; alkyl having 1 to 20 carbon atoms; alkenyl having 2 to 10 carbon atoms; alkylaryl having 7 to 40 carbon atoms; arylalkyl having 7 to 40 carbon atoms; aryl having 6 to 20 carbon atoms; a substituted or unsubstituted alkylidene having 1 to 20 carbon atoms; a substituted or unsubstituted amino group; alkylalkoxy having 2 to 20 carbon atoms; or arylalkoxy having 7 to 40 carbon atoms; and
n is 1 or 0.

Further, the present invention provides a method for preparing the hybrid supported metallocene catalyst, comprising the subsequent steps of:
1) preparing a support,
2) supporting a co-catalyst compound on the support,
3) supporting a metallocene compound represented by Formula 1 on the support, and
4) supporting a metallocene compound represented by Formula 2 on the support.

Further, the present invention provides a method for preparing an olefin-based polymer, comprising the step of polymerizing olefinic monomers under the hybrid supported metallocene catalyst.

### [Advantageous Effects]

The hybrid supported metallocene catalyst according to the present invention comprises two different kinds of metallocene compounds, in which one kind of the metallocene compound is a transition metal compound coordinated with quinoline-based amido group-introduced monocyclopentadienyl ligand, and thus the catalyst has an excellent activity and is able to prepare an olefin-based polymer with a high molecular weight and desired physical properties.

### [Description of Drawings]

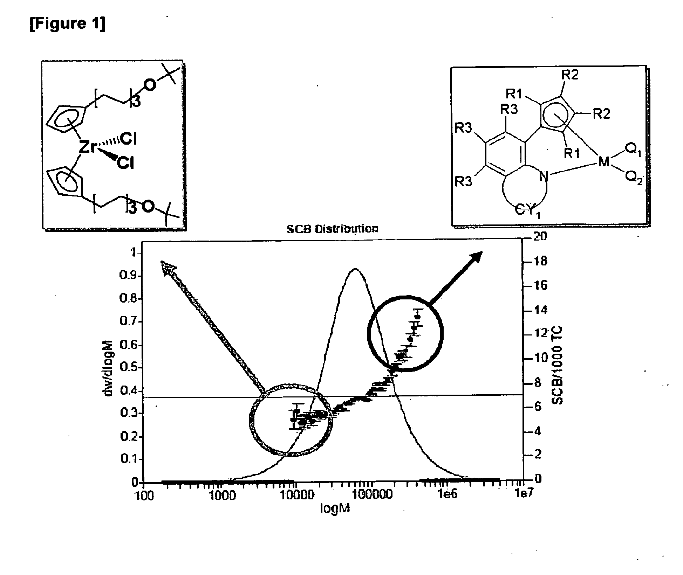

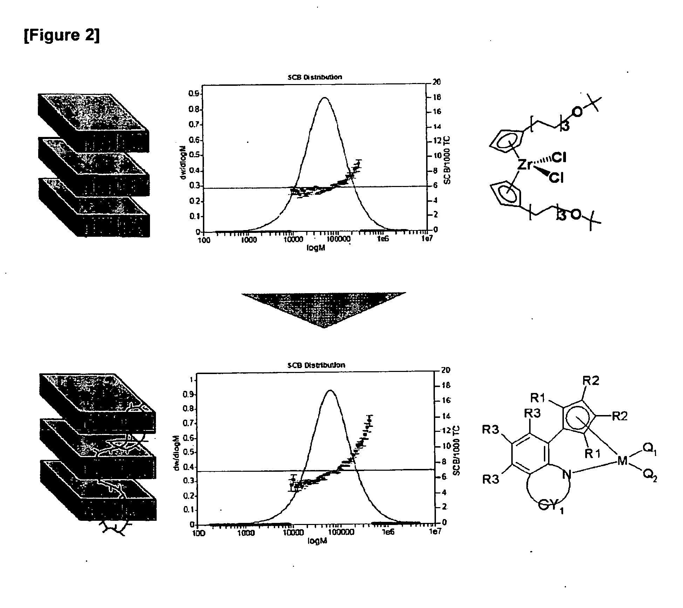

FIGs. 1 and 2 are diagrams showing the molecular weight distribution and SCB (short chain branch) content of the olefin-based copolymer according to one specific embodiment of the present invention.

### [Description of the Embodiments]

The hybrid supported metallocene catalyst according to the present invention comprises a metallocene compound represented by Formula 1, a metallocene compound represented by Formula 2, a co-catalyst compound and a support.

The above described substituents of Formula 1 are defined as follows.

The hydrocarbyl is a monovalent moiety formed by removing a hydrogen atom from a hydrocarbon, and comprises ethyl, phenyl or the like.

The metalloid is an element which behaves chemically both as a metal and as a non-metal, and comprises arsenic, boron, silicon, tellurium or the like.

Among the metallocene compounds represented by Formula 1, more preferred compounds for the control of electronic, steric environment in the vicinity of metal comprise the metallocene compound represented by the following Formula 3 or 4.

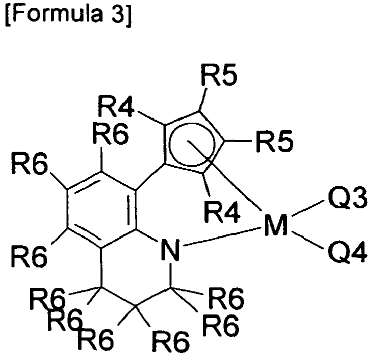

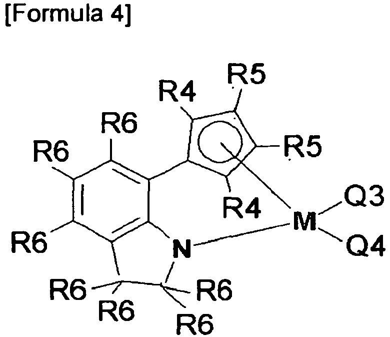

In Formula 3 and Formula 4, R4 and R5 are the same as or different from each other, and are each independently hydrogen; an alkyl radical having 1 to 20 carbon atoms; an aryl radical having 6 to 20 carbon atoms; or a silyl radical;

R6s are the same as or different from each other, and are each independently hydrogen; an alkyl radical having 1 to 20 carbon atoms ; an alkenyl radical having 2 to 20 carbon atoms ; an aryl radical having 6 to 20 carbon atoms; an alkylaryl radical having 7 to 20 carbon atoms; an arylalkyl radical having 7 to 20 carbon atoms; an alkoxy radical having 1 to 20 carbon atoms; an aryloxy radical having 6 to 20 carbon atoms; or an amido radical; and two or more of R6 may be connected to each other to form an aliphatic or aromatic ring;
Q3 and Q4 are the same as or different from each other, and are each independently a halogen radical; an alkyl radical having 1 to 20 carbon atoms; an alkyl amido radical having 1 to 20 carbon atoms; or an aryl amido radical having 6 to 20 carbon atoms; and
M is a Group 4 transition metal.

Among the metallocene compounds represented by Formula 1, more preferred compounds for the control of electronic, steric environment in the vicinity of metal comprise the metallocene compounds having the following structure. 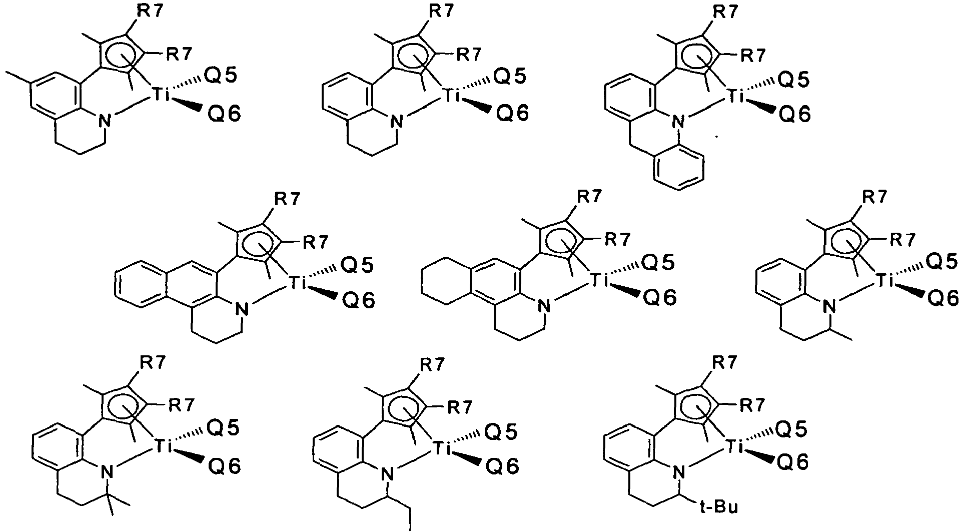 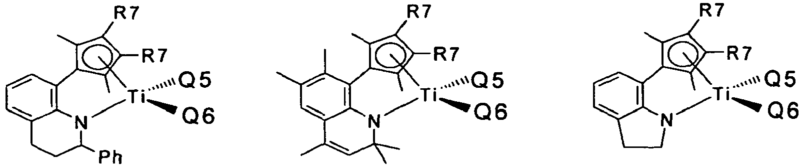
wherein R7s are the same as or different from each other, and are each independently selected from hydrogen and a methyl radical, and
Q5 and Q6 are the same as or different from each other, and are each independently selected from a methyl radical, a dimethylamido radical, and a chloride radical.

More preferred examples of the metallocene compound represented by Formula 2 comprise the compounds of following structures, but are not limited thereto. 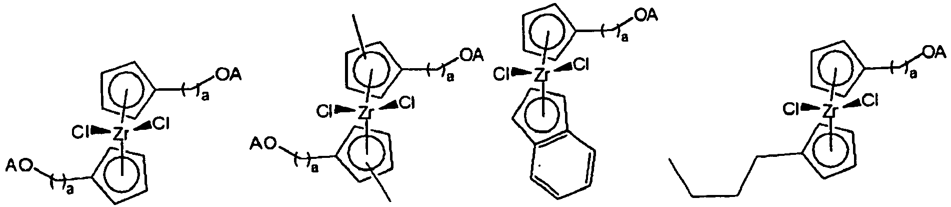 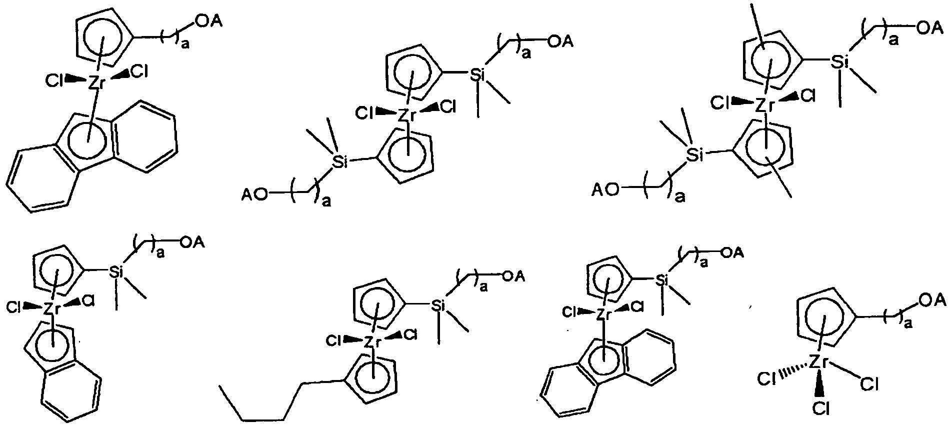 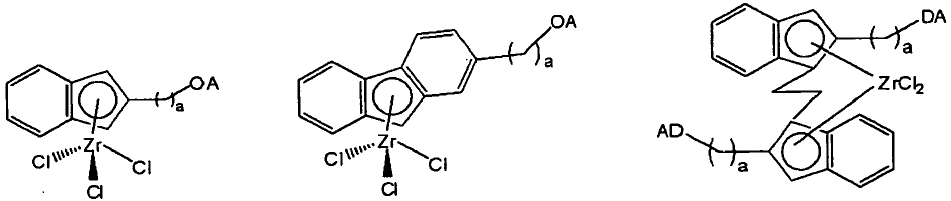 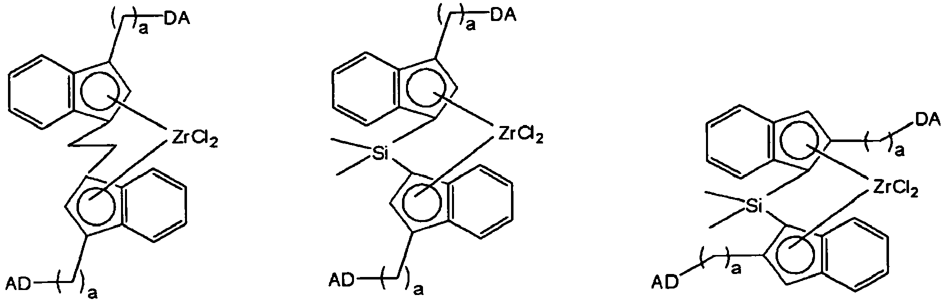 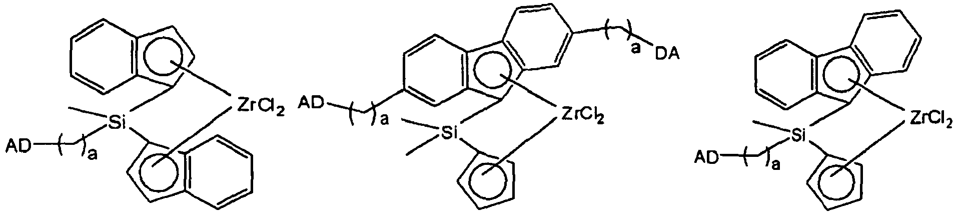 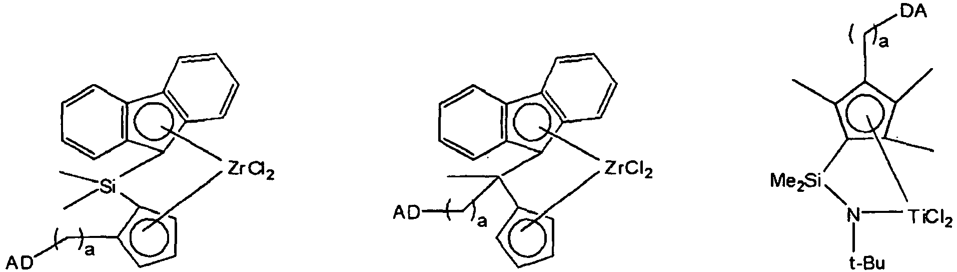 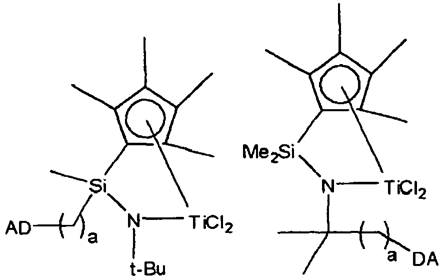
wherein a is an integer of 4 to 8,
D is an oxygen or nitrogen atom,
A is selected from the group consisting of hydrogen, alkyl having 1 to 20 carbon atoms, alkenyl having 1 to 20 carbon atoms, aryl, alkylaryl, arylalkyl, alkylsilyl, arylsilyl, methoxymethyl, t-butoxymethyl, tetrahydropyranyl, tetrahydrofuranyl, 1-ethoxyethyl, 1-methyl-1-methoxyethyl and t-butyl.

More preferred examples of the metallocene compound represented by Formula 2 comprise the compound represented by the following Formula 5, but are not limited thereto.

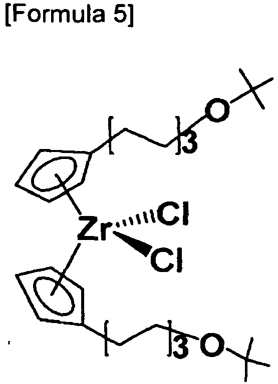

The hybrid supported metallocene catalyst according to the present invention is prepared by supporting the metallocene compound represented by Formula 1 and the metallocene compound represented by Formula 2 with a co-catalyst compound on a support.

In the hybrid supported metallocene catalyst, the metallocene compound represented by Formula 1 serves to prepare copolymers having a high molecular weight and SCB (short chain branch) content, and the metallocene compound represented by Formula 2 serves to prepare copolymers having a low molecular weight and SCB (short chain branch) content. The molecular weight distribution and SCB (short chain branch) content of the copolymer according to one specific embodiment of the present invention are shown in FIG. 1.

In accordance with the hybrid supported metallocene catalyst of the present invention, in the metallocene compound represented by Formula 1, the metal position is connected by a cyclopentadienyl ligand, to which an amido group is introduced in a cyclic form via a phenylene bridge, and thus there is tendency that structurally the Cp-M-N angle keeps narrow, while the Q1-M-Q2 angle for approach of the monomers keeps wide. Further, to be contrary with the CGC structure having a linkage via a silicon bridge, for example, the metallocene compound structure represented by Formula 1 has a stable and rigid pentagon ring structure having metal positions with a Cp, a phenylene bridge, and a nitrogen atom due to the cyclic form. That is, the nitrogen atom of the amido group is connected with the phenylene bridge by two bonds in a cyclic form, so that the complex has a more rigid structure. Thus, when these transition metal compounds are used to prepare a hybrid supported metallocene catalyst, it is possible that even at a high polymerization temperature, an olefin-based polymer having the characteristics such as high activity, high molecular weight, and high copolymerizability is produced, as compared with the known hybrid supported metallocene catalysts.

Meanwhile, when the metallocene compound represented by Formula 2 is singly used in the preparation of polyolefin, a copolymer having a low molecular weight and SCB (short chain branch) content is prepared. However, since the hybrid supported metallocene catalyst comprising the metallocene compound represented by Formula 1 and the metallocene compound represented by Formula 2 is used in the present invention, a copolymer having a high molecular weight and high SCB (short chain branch) content can be prepared, and an olefin polymer having excellent physical properties and processability can be prepared. The molecular weight distribution and SCB (short chain branch) content of the copolymer according to one specific embodiment of the present invention are shown in FIG. 2.

In the hybrid supported metallocene catalyst according to the present invention, the co-catalyst compound is preferably a metal compound containing a Group 13 metal of the Periodic Table. As the co-catalyst compound, cocatalysts that are generally used for olefin polymerization in the presence of metallocene catalyst can be used. If the cocatalyst is supported on the above described support, a bond between the hydroxyl group on the support and Group 13 metal occurs.

Specifically, it is preferable that the co-catalyst compound comprises the compound represented by the following Formula 6.

[Formula 6] -[Al(R8)-O]a-

wherein R8s are the same as or different from each other, and are each independently a halogen radical; a hydrocarbyl radical having 1 to 20 carbon atoms; or a hydrocarbyl radical having 1 to 20 carbon atoms that is substituted with halogen; and a is an integer of 2 or more.

In this connection, the compound represented by Formula 5 may have a linear, circular or network structure. Examples of the compound comprise methylaluminoxane (MAO), ethylaluminoxane, isobutylaluminoxane, and butylaluminoxane, and preferably methylaluminoxane.

In the hybrid supported metallocene catalyst according to the present invention, the weight ratio of the transition metals of the metallocene compound represented by Formula 1 and the metallocene compound represented by Formula 2 to the support is preferably 1 : 10 to 1 : 1,000, the weight ratio of the co-catalyst compound to the support is preferably 1 : 1 to 1 : 100, and the weight ratio of the metallocene compound represented by Formula 1 to the metallocene compound represented by Formula 2 is preferably 1 : 0.01 to 1 : 100.

In the hybrid supported metallocene catalyst according to the present invention, as the support, a support containing a hydroxyl group on its surface can be used, and preferably, a support containing a highly reactive hydroxyl group and siloxane group, on which the surface is dried without moisture, can be used.

For example, silica, silica-alumina, and silica-magnesia that are dried at high temperature can be used, and may usually contain oxides, carbonates, sulfates, and nitrates such as Na₂O, K₂CO₃, BaSO₄, and Mg(NO₃)₂ or the like.

The support is preferably dried at 200 to 800°C, more preferably 300 to 600°C, and most preferably 300 to 400°C. If the drying temperature of the support is less than 200°C, much moisture on its surface may be reacted with the cocatalyst. If the drying temperature is more than 800°C, pores on the support surface are combined with each other to reduce surface area, the hydroxyl groups are removed and only the siloxane groups remain on the surface. Thus, the reactive sites with cocatalyst are reduced.

An amount of hydroxyl group on the surface of support a) is preferably 0.1 to 10 mmol/g, and more preferably 0.5 to 1 mmol/g. The amount of hydroxyl group on the surface of support a) can be controlled depending on the preparation method of the support and its conditions, or drying conditions such as temperature, time, vacuum, and spray drying.

If the amount of hydroxyl group is less than 0.1 mmol/g, the reactive sites with cocatalyst are reduced. If the amount of hydroxyl group is more than 10 mmol/g, the hydroxyl groups may come from moisture, in addition to hydroxyl groups being present on the particle surface of support, which is not preferable.

The hybrid supported metallocene catalyst according to the present invention can be used for polymerization of olefinic monomers without any treatment. Also, the hybrid supported metallocene catalyst according to the present invention can be prepared into a pre-polymerized catalyst by contacting the catalyst with an olefinic monomer, and for example, it can be prepared into a pre-polymerized catalyst by contacting the catalyst with an olefinic monomer such as ethylene, propylene, 1-butene, 1-hexene, and 1-octene.

The method for preparing the hybrid supported metallocene catalyst according to the present invention comprises the steps of: 1) preparing a support, 2) supporting a co-catalyst compound on the support, 3) supporting a metallocene compound represented by Formula 1 on the support, and 4) additionally supporting a metallocene compound represented by Formula 2 on the support.

In the method for preparing the hybrid supported metallocene catalyst according to the present invention, step 3) and step 4) can be performed in any order, if necessary. That is, after supporting the metallocene compound represented by Formula 2 on the support, the metallocene compound represented by Formula 1 can be additionally supported on the support to prepare the hybrid supported metallocene catalyst.

Further, the present invention provides a method for preparing an olefin-based polymer, comprising the step of polymerizing olefinic monomers in the presence of the hybrid supported metallocene catalyst.

The olefinic monomer may comprise ethylene, alpha-olefin, cyclic olefin, and diene or triene olefin having at least two double bonds.

Specific example of the olefinic monomer comprise ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicocene, norbornene, norbornadiene, ethylidenenorbornene, phenylnorbornene, vinylnorbornene, dicyclopentadiene, 1,4-butadiene, 1,5-pentadiene, 1,6-hexadiene, styrene, alpha-methylstyrene, di-vinylbenzene, and 3-chloromethylstyrene, and two or more of monomers may be mixed to be copolymerized.

In the method for preparing an olefin-based polymer according to the present invention, a slurry process, a gas phase process, or a combination of slurry and gas phase processes can be applied to the polymerization. A slurry process or a gas phase process is preferable.

Further, the polymerization process is preferably performed at the temperature of 50 to 150°C, and at the pressure of 10 to 50 atm, but it varies depending on the process.

In the method for preparing an olefin-based polymer according to the present invention, the hybrid supported metallocene catalyst can be used after being dissolved or diluted using an aliphatic hydrocarbon solvent having 5 to 12 carbon atoms such as pentane, hexane, heptane, nonane, decane and isomers thereof, an aromatic hydrocarbon solvent such as toluene and benzene, or a hydrocarbon solvent substituted with a chlorine atom such as dichloromethane and chlorobenzene. Preferably, the solvent is treated with a trace amount of alkyl aluminum to remove catalytic poisons like water, air or the like, and a cocatalyst can be further used.

According to the method for preparing an olefin-based polymer of the present invention, a polymer having a high molecular weight and SCB (short chain branch) content can be prepared, and thus the polymer has excellent physical properties as well as excellent processability.

### [Examples]

Hereinafter, the present invention will be described in detail with reference to Examples of the present invention. Examples of the present invention may be modified in many different forms and should not be construed as being limited to Examples set forth herein. Rather, Examples of the present invention are provided so that this disclosure will be thorough and complete and will fully convey the concept of the present invention to those skilled in the art.

### <Example>

### <Preparation Example 1> Preparation of metallocene catalyst A - Synthesis of [tBu-O-(CH₂)₆-C₅H₄]₂ZrCl₂

t-Butyl-O-(CH₂)₆-Cl was prepared using 6-chlorohexanol according to the method suggested in the literature (Tetrahedron Lett. 2951 (1988)), and reacted with NaCp to obtain t-Butyl-O-(CH₂)₆-C₅H₅ (yield 60%, b.p. 800 / 0.1 mmHg). Zirconium was attached by the same method to obtain another compound, which is also one of the target catalysts (yield: 92 %).

### <Preparation Example 2> Preparation of metallocene catalyst B - Synthesis of [CH₃-(CH₂)₃-C₅H₄]₂ZrCl₂

n-Butylchloride and NaCp are reacted with each other to prepare n-BuCp, and then reacted with ZrCl₄THF to prepare the catalyst B (yield 50%).

### <Preparation Example 3> Preparation of metallocene catalyst C - [(6-methyl-1,2,3,4-tetrahydroquinolin-8-yl) trimethylcyclopentadienyl-η⁵,κ-N] titanium dichloride compound

6-Methyl-1,2,3,4-tetrahydroquinoline (1.16 g, 7.90 mmol) was dissolved in carbon tetrachloride (4 mL), and cooled to -20°C. Solid N-bromosuccinimide (1.41 g, 7.90 mml) was slowly added thereto, the reaction temperature was raised to room temperature, and further reacted for 5 hours. The obtained compound was purified by column chromatography using an MC and hexane (v:v = l:l) solvent, and light yellow oil was obtained (0.71 g, 40%).

Degassed DME (dimethylether) (21 mL) and distilled water (7 mL) were added to the mixture of 2,3-dimethyl-5-oxocyclopent-l-enylboronic acid (1.27 g, 8.26 mmol), Na₂CO₃ (1.25 g, 11.8 mmol), Pd(PPh₃)₄ (0.182 g, 0.157 mmol), and the prepared 8-bromo-1,2,3,4-tetrahydro-6-methylquinoline (7.87 mmol), and heated at 95°C overnight. The reaction solution was cooled to room temperature, and extracted from an ethylacetate solvent (50 mL) twice. The obtained compound was purified by column chromatography using a hexane and ethylacetate (2:1) solvent, and a light yellow solid was obtained (90%).

Anhydrous La(OTf)₃ (21.4 mmol) and THF (24 mL) solution were cooled to -78°C. Then, MeLi (13.4 mL, 21.4 mmol) was added thereto, and reacted for 1 hour. The prepared 5-(3,4-dimethyl-2-cyclopenten-l-on)-7-methyl-1,2,3,4-tetrahydroquinoline (7.13 mmol) compound was added thereto, reacted at -78°C for 2 hours, and extracted using water and an acetate solvent. The obtained organic layer was shaken with HCl (2 N, 20 mL) for 2 minutes, and neutralized with aqueous NaHCO₃ (20 mL) to be dried with MgSO₄. The obtained compound was purified by column chromatography using a hexane and ethylacetate (10:1) solvent, and a light yellow solid was obtained (40%).

The obtained 1,2,3,4-tetrahydro-6-methyl-8-(2,3,5-trimethylcyclopenta-1,3-dienyl) quinoline ligand (0.696 mmol) and Ti(NMe₂)₄ compound (0.156 g, 0.696 mmol) were dissolved in toluene (2 mL), and then reacted at 80°C for 2 days. Then, all solvents were removed to obtain a red solid compound (100%).

Toluene (2 mL) was further added to the obtained red solid compound. Then, Me₂SiCl₂ (0.269 g, 2.09 mmol) was added thereto at room temperature, and reacted for 4 hours. The obtained compound was recrystallized in the presence of hexane at -30°C to obtain a pure red solid (0.183 g, 66%).

### <Preparation Example 4> Preparation of metallocene catalyst D - Synthesis of tBu-O-(CH₂)₆)(CH₃)Si(C₅H₄)(9-C₁₃H₉)ZrCl₂

tBu-O-(CH₂)₆Cl compound and Mg(0) were reacted in a diethyl ether (Et20) solvent to obtain 0.14 mol of a tBu-O-(CH₂)₆MgCl solution, which is a Grignard reagent. Then, a MeSiCl₃ compound (24.7 mL, 0.21 mol) was added at -100°C. Stirring was carried out for over 3 hours at room temperature. Then, the solution was filtered and dried under vacuum to obtain a tBu-O-(CH₂)₆SiMeCl₂ compound (yield: 84%). A fluorenyllithium (4.82 g, 0.028 mol)/hexane (150 mL) solution was slowly added for 2 hours to a tBu-O-(CH₂)₆SiMeCl₂ (7.7 g, 0.028 mol) solution dissolved in hexane (50 mL) at -78°C. A white precipitate (LiCl) was filtered out, and extraction was carried out using hexane. All volatile materials were removed by vacuum drying to obtain a pale yellow oily (tBu-O-(CH₂)₆)SiMe(9-C₁₃H₁₀) compound (yield: 99%).

A THF solvent (50 mL) was added, and a reaction with a C₅H₅Li (2.0 g, 0.028 mol)/THF (50 mL) solution was carried out at room temperature for over 3 hours. All volatile materials were removed by vacuum drying and extraction was carried out using hexane to obtain an orange oily (tBu-O-(CH₂)₆)(CH₃)Si(C₅H₅)(9-C₁₃H₁₀) compound, which is the target ligand (yield: 95%). The structure of the ligand was identified by 1H NMR.

In addition, 2 equivalents of n-BuLi were added to a (tBu-O-(CH₂)₆)(CH₃)Si(C₅H₅)(9-C₁₃H₁₀)(12g, 0.028mol)/THF (100 mL) solution at -78°C. Heating to room temperature, a reaction was carried out for over 4 hours to obtain an orange solid (tBu-O-(CH₂)₆)(CH₃)Si(C₅H₅Li)(9-C₁₃H₁₀Li) compound (yield: 81 %). A dilithium salt (2.0 g, 4.5 mmol)/ether (30 mL) solution was slowly added to a ZrCl₄ (1.05 g, 4.50 mmol)/ether (30 mL) suspension at -78°C. A reaction was carried out for 3 hours at room temperature. All volatile materials were removed by vacuum drying, and the resultant oily liquid was filtered by adding a dichloromethane solvent. The filtered solution was vacuum dried, and hexane was added to induce precipitation. The resultant precipitate was washed several times with hexane to obtain a red solid racemic-(t Bu-O-(CH₂)₆)(CH₃)Si(C₅H₄)(9-C₁₃H₉)ZrCl₂ compound (yield: 54%).

### <Preparation Example 5> Preparation of metallocene catalyst E - Synthesis of [(2-methyl-N-(dimethyl(2,3,4,5-tetramethylcyclopenta-1,3-dienyl)silyl)propan-2-amine)] titanium dichloride compound

The compound was prepared with reference to WO92/000333.

### <Examples 1 to 3> Preparation of hybrid supported metallocene catalyst

### 1) Drying of support

Silica (SYLOPOL 948 manufactured by Grace-Davison) was dehydrated and dried under vacuum at 400°C for 15 hours.

### 2) Preparation of supported catalyst

1.0 g of the silica was put in a glass reactor, and 10 ml of toluene was added thereto. 5 ml of 10 wt% methylaluminoxane (MAO)/ toluene solution was added thereto, and the mixture was slowly reacted under stirring at 40°C. The unreacted aluminum compound was removed by washing a sufficient amount of toluene. Then, the remaining toluene was removed under reduced pressure at 50°C. After adding 10 ml of toluene, 50 mg of the metallocene catalyst A prepared in Preparation Example 1 was dissolved in toluene and added thereto, and a reaction was carried out for 1 hour. After the reaction was completed and the stirring was stopped, the toluene was removed by layer separation. After washing once with 20 mL of a toluene solution, 25 mg, 50 mg, and 100 mg of the metallocene catalyst C prepared in Preparation Example 3 were dissolved in toluene, and added again, and a reaction was carried out for 1 hour. Then, the solution was filtered out, and the resultant was washed with toluene two times, and dried under reduced pressure to obtain a solid powder.

### <Examples 4 to 6>

The procedure was carried out in the same manner as in the method for preparing a supported catalyst of Examples 1 to 3, except that the metallocene catalyst B was used instead of the metallocene catalyst A.

### <Comparative Examples 1 to 4>

The procedure was carried out using the metallocene catalyst A and B in the same manner as in the method for preparing a supported catalyst of Examples 1 to 6, except that each 50 mg of the metallocene catalyst D and E were used instead of the metallocene catalyst C.

### <Experimental Example> Semibatch ethylene polymerization

50 mg of each supported catalyst prepared in Examples 1 to 6, and Comparative Examples 1 to 4 was weighed in a dry box and put in a 50 mL glass bottle. The bottle was sealed with a rubber diaphragm and taken out of the dry box, and a catalyst was ready for injection. The polymerization was performed in a 2 L metal alloy reactor for high pressure, equipped with a mechanical stirrer and capable of temperature control.

1 L of hexane dissolving 1.0 mmol of triethylaluminum, and 1-hexene (20 ml) were added to the reactor, and then the prepared supported catalyst was added thereto without contact with air. The polymerization was carried out for an hour at 80°C, continuously applying a gaseous ethylene monomer at a pressure of 9 Kgf/cm². The polymerization was terminated by stopping the stirring and then exhausting the unreacted ethylene.

The resultant polymer was filtered through a polymerization solvent and dried in an 80°C vacuum oven for 4 hours.

The ethylene/1-hexene polymerization activity, molecular weight and molecular weight distribution for each prepared catalyst are shown in Table 2 below.

**[Table 1]**

| Section | Metallocene catalyst (mg) | Polymerization activity (kg-PE/g-Cat.) | Molecular weight (Mw/10⁴) | Molecular weight distribution (MWD) |
|---|---|---|---|---|
| Example 1 | A (50) / C (25) | 10.6 | 21.4 | 3.4 |
| Example 2 | A (50) / C (50) | 9.2 | 30.8 | 4.2 |
| Example 3 | A (50) / C (100) | 6.7 | 45.8 | 5.5 |
| Example 4 | B (50) / C (25) | 11.5 | 22.6 | 3.2 |
| Example 5 | B (50) / C (50) | 10.7 | 32.4 | 4.3 |
| Example 6 | B (50) / C (100) | 7.6 | 50.3 | 5.8 |
| Comparative Example 1 | A (50) / D (50) | 7.3 | 10.7 | 2.5 |
| Comparative Example 2 | A (50) / E (50) | 4.2 | 18.7 | 3.4 |
| Comparative Example 3 | B (50) / D (50) | 7.6 | 13.3 | 2.7 |
| Comparative Example 4 | B (50) / E (50) | 5.6 | 20.1 | 3.3 |

In Examples 1 to 6 and Comparative Examples 1 to 4, two different kinds of metallocene catalysts were used. One is the metallocene catalyst A or B, which is a catalyst having a low molecular weight and high activity. The other is the metallocene catalyst C, D or E, which is a catalyst producing polyethylene with a high molecular weight. As shown in the results of the above experiments, the metallocene catalyst C was used as a catalyst producing polyethylene with a high molecular weight in the Examples of the present invention.

When ethylene/1-hexene copolymerization was performed using the supported catalyst for the preparation of polyolefin, which was prepared according to Examples of the present invention, the polymerization activity could be controlled in the range of 6.7 to 11.5 (about 30% or more improved, compared to Comparative Example), the weight-average molecular weight (Mw) could be controlled in the range of 210,000 to 500,000, and the molecular weight distribution could be maintained in the range of 3.2 to 5.8 by controlling the ratio of the metallocene catalysts. It is difficult to produce polyethylene with a high molecular weight using the metallocene catalyst D or E in Comparative Examples, as compared to the metallocene catalyst C, showing the low polymerization activity and weight-average molecular weight. Consequently, in order to prepare medium- or low density-polyethylene using the system supporting two or more metallocene catalysts, when the metallocene catalyst C is used to prepare a supported catalyst, its efficiency is improved, compared to the metallocene catalyst D or E, thereby providing equal or better effects even using a small amount of catalyst.

## Claims

1. A method for preparing a hybrid supported metallocene catalyst, comprising the subsequent steps of:
1) preparing a support,
2) supporting a co-catalyst compound on the support,
3) supporting a metallocene compound represented by Formula 2 on the support, and
4) supporting a metallocene compound represented by Formula 1 on the support: 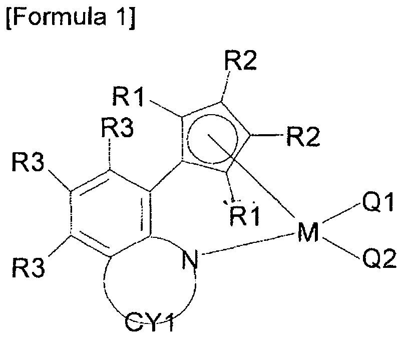
wherein R1 and R2 are the same as or different from each other, and are each independently hydrogen; an alkyl radical having 1 to 20 carbon atoms; an alkenyl radical having 2 to 20 carbon atoms; an aryl radical having 6 to 20 carbon atoms; a silyl radical; an alkylaryl radical having 7 to 20 carbon atoms; an arylalkyl radical having 7 to 20 carbon atoms; or a metalloid radical of Group 4 substituted with hydrocarbyl group; R1 and R2 or two R2s may be connected to each other by an alkylidene radical containing an alkyl radical having 1 to 20 carbon atoms or aryl radical having 6 to 20 carbon atoms to form a ring;
R3s are the same as or different from each other, and are each independently hydrogen; a halogen radical; an alkyl radical having 1 to 20 carbon atoms; an aryl radical having 6 to 20 carbon atoms; an alkoxy radical having 1 to 20 carbon atoms; an aryloxy radical having 6 to 20 carbon atoms; or amido radical; and two or more of R3 may be connected to each other to form an aliphatic or aromatic ring;
CY1 is a substituted or unsubstituted aliphatic or aromatic ring comprising nitrogen, in which CY1 may be substituted with a halogen radical; an alkyl radical having 1 to 20 carbon atoms; an alkenyl radical having 2 to 20 carbon atoms; an aryl radical having 6 to 20 carbon atoms; an alkylaryl radical having 7 to 20 carbon atoms; an arylalkyl radical having 7 to 20 carbon atoms; an alkoxy radical having 1 to 20 carbon atoms; an aryloxy radical having 6 to 20 carbon atoms; or an amido radical, and in the case where CY1 is substituted with the plural substituents, two or more substituents may be connected to each other to form an aliphatic or aromatic ring;
M is a Group 4 transition metal;
Q1 and Q2 are the same as or different from each other, and are each independently a halogen radical; an alkyl radical having 1 to 20 carbon atoms; an alkenyl radical having 2 to 20 carbon atoms; an aryl radical having 6 to 20 carbon atoms; an alkylaryl radical having 7 to 20 carbon atoms; an arylalkyl radical having 7 to 20 carbon atoms; an alkyl amido radical having 1 to 20 carbon atoms; an aryl amido radical having 6 to 20 carbon atoms; or an alkylidene radical having 1 to 20 carbon atoms,
[Formula 2]
(CₚR)ₙ(Cp'R')MQ₃₋ₙ
wherein M is a Group 4 transition metal;
Cp and Cp' are the same as or different from each other, and are each independently any one selected from the group consisting of cyclopentadienyl, indenyl, 4,5,6,7-tetrahydro-1-indenyl, and fluorenyl radicals, in which they may be substituted with hydrocarbon having 1 to 20 carbon atoms;
R and R' are the same as or different from each other, and are each independently hydrogen; alkyl having 1 to 20 carbon atoms; alkoxy having 1 to 10 carbon atoms; aryl having 6 to 20 carbon atoms; aryloxy having 6 to 10 carbon atoms; alkenyl having 2 to 20 carbon atoms; alkylaryl having 7 to 40 carbon atoms; arylalkyl having 7 to 40carbon atoms; arylalkenyl having 8 to 40 carbon atoms; or alkynyl having 2 to 10 carbon atoms;
Q is a halogen atom; alkyl having 1 to 20 carbon atoms; alkenyl having 2 to 10 carbon atoms; alkylaryl having 7 to 40 carbon atoms; arylalkyl having 7 to 40 carbon atoms; aryl having 6 to 20 carbon atoms; a substituted or unsubstituted alkylidene having 1 to 20 carbon atoms; a substituted or unsubstituted amino group; alkylalkoxy having 2 to 20 carbon atoms; or arylalkoxy having 7 to 40 carbon atoms; and
n is 1 or 0.

2. The method for preparing a hybrid supported metallocene catalyst according to claim 1, wherein the metallocene compound represented by Formula 1 is a metallocene compound represented by the following Formula 3 or 4: 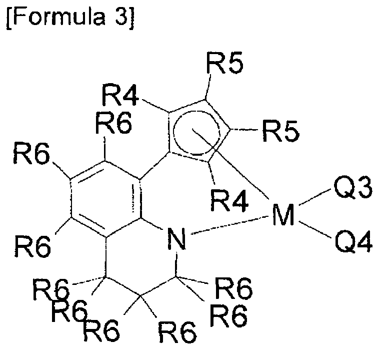 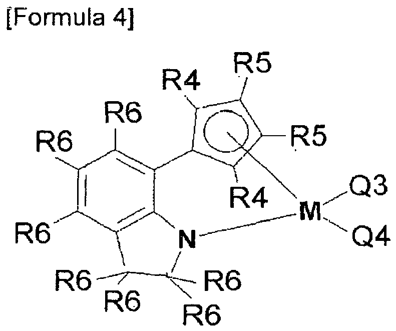 wherein R4 and R5 are the same as or different from each other, and are each independently hydrogen; an alkyl radical having 1 to 20 carbon atoms; an aryl radical having 6 to 20 carbon atoms; or a silyl radical;
R6s are the same as or different from each other, and are each independently hydrogen; an alkyl radical having 1 to 20 carbon atoms ; an alkenyl radical having 2 to 20 carbon atoms; an aryl radical having 6 to 20 carbon atoms; an alkylaryl radical having 7 to 20 carbon atoms; an arylalkyl radical having 7 to 20 carbon atoms; an alkoxy radical having 1 to 20 carbon atoms; an aryloxy radical having 6 to 20 carbon atoms; or an amido radical; and two or more of R6 may be connected to each other to form an aliphatic or aromatic ring;
Q3 and Q4 are the same as or different from each other, and each independently a halogen radical; an alkyl radical having 1 to 20 carbon atoms; an alkyl amido radical having 1 to 20 carbon atoms; or an aryl amido radical having 6 to 20 carbon atoms; and
M is a Group 4 transition metal.

3. The method for preparing a hybrid supported metallocene catalyst according to claim 1, wherein the metallocene compound represented by Formula 1 is selected from the group consisting of metallocene compounds of the following structures: 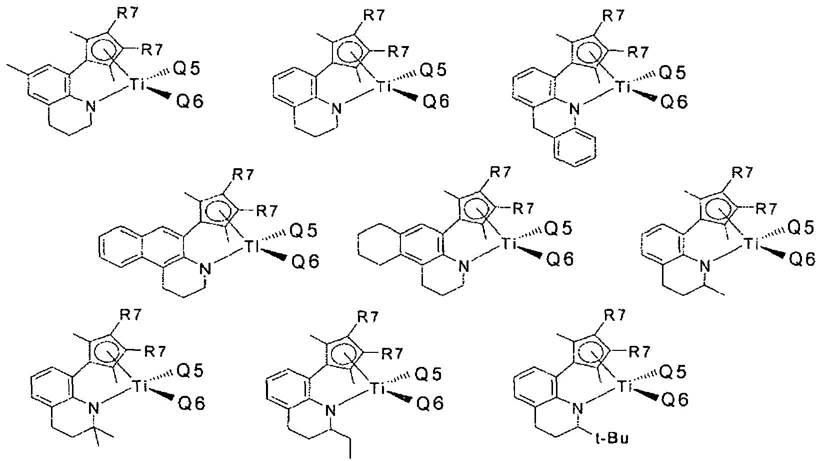 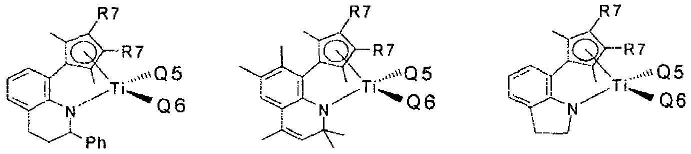 wherein R7s are the same as or different from each other, and are each independently selected from hydrogen and a methyl radical, and
Q5 and Q6 are the same as or different from each other, and are each independently selected from a methyl radical, a dimethylamido radical, and a chloride radical.

4. The method for preparing a hybrid supported metallocene catalyst according to claim 1, wherein the metallocene compound represented by Formula 2 is selected from the group consisting of metallocene compounds of the following structures: 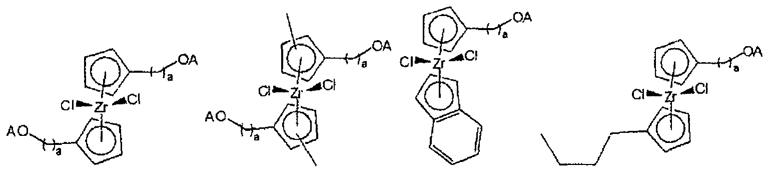 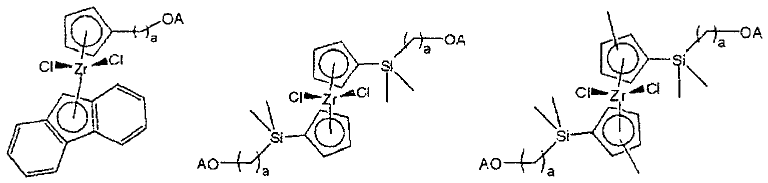 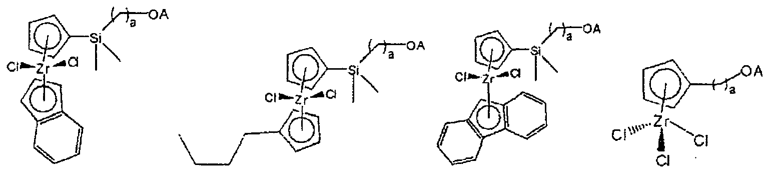 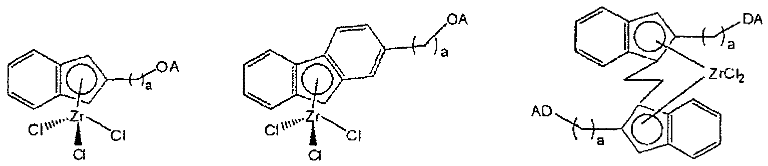 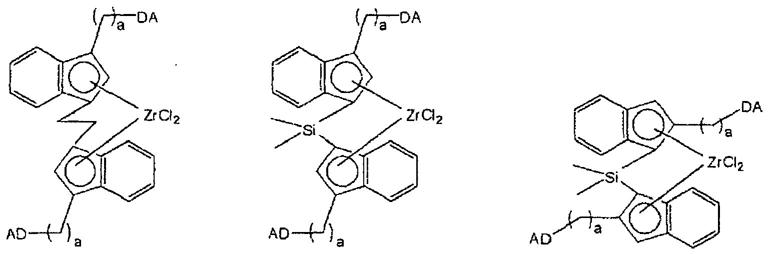 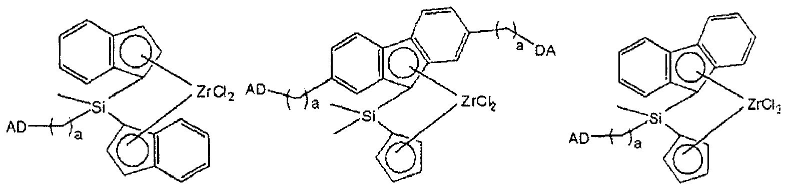 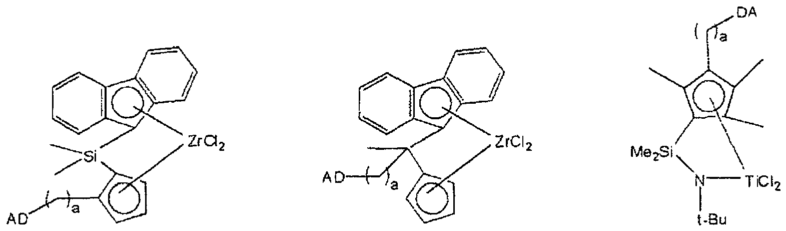 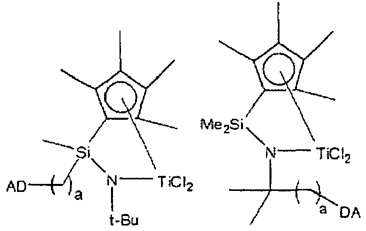 wherein a is an integer of 4 to 8,
D is an oxygen or nitrogen atom,
A is selected from the group consisting of hydrogen, alkyl having 1 to 20 carbon atoms, alkenyl having 1 to 20 carbon atoms, aryl, alkylaryl, arylalkyl, alkylsilyl, arylsilyl, methoxymethyl, t-butoxymethyl, tetrahydropyranyl, tetrahydrofuranyl, 1-ethoxyethyl, 1-methyl-1-methoxyethyl and t-butyl.

5. The method for preparing a hybrid supported metallocene catalyst according to claim 1, wherein the co-catalyst compound comprises a compound represented by the following Formula 6:
[Formula 6] -[Al(R8)-O]a-
wherein R8s are the same as or different from each other, and are each independently a halogen radical; a hydrocarbyl radical having 1 to 20 carbon atoms; or a hydrocarbyl radical having 1 to 20 carbon atoms that is substituted with halogen; and a is an integer of 2 or more.

6. The method for preparing a hybrid supported metallocene catalyst according to claim 1, wherein the weight ratio of the transition metals of the metallocene compound represented by Formula 1 and the metallocene compound represented by Formula 2 to the support is 1 : 10 to 1 : 1,000.

7. The method for preparing a hybrid supported metallocene catalyst according to claim 1, wherein the weight ratio of the co-catalyst compound to the support is 1 : 1 to 1 : 100.

8. The method for preparing a hybrid supported metallocene catalyst according to claim 1, wherein the weight ratio of the metallocene compound represented by Formula 1 to the metallocene compound represented by Formula 2 is 1 : 0.01 to 1 : 100.

9. The method for preparing a hybrid supported metallocene catalyst according to claim 1, wherein the support is selected from the group consisting of silica, silica-alumina, and silica-magnesia.

## Patentansprüche

1. Verfahren zum Herstellen eines geträgerten Hybridmetallocenkatalysators, welches die aufeinanderfolgenden Schritte umfasst:
1) Herstellen eines Trägers,
2) Trägern einer Cokatalysatorverbindung auf dem Träger,
3) Trägern einer Metallocenverbindung, die durch Formel 2 dargestellt ist, auf dem Träger, und
4) Trägern einer Metallocenverbindung, die durch Formel 1 dargestellt ist, auf dem Träger: 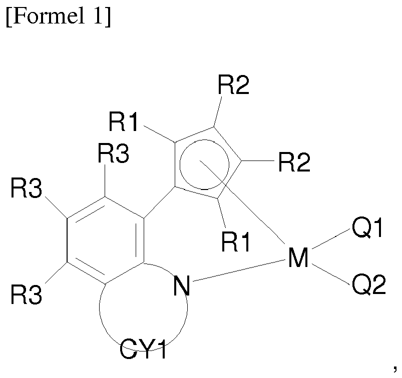
wobei R1 und R2 gleich oder verschieden voneinander sind und jeweils unabhängig Wasserstoff; ein Alkylrest mit 1 bis 20 Kohlenstoffatomen; ein Alkenylrest mit 2 bis 20 Kohlenstoffatomen; ein Arylrest mit 6 bis 20 Kohlenstoffatomen; ein Silylrest; ein Alkylarylrest mit 7 bis 20 Kohlenstoffatomen; ein Arylalkylrest mit 7 bis 20 Kohlenstoffatomen; oder ein metallischer Rest der Gruppe 4 substituiert mit einer Kohlenwasserstoffgruppe ist; wobei R1 und R2 oder zwei R2s miteinander durch einen Alkylidenrest enthaltend einen Alkylrest mit 1 bis 20 Kohlenstoffatomen oder einen Arylrest mit 6 bis 20 Kohlenstoffatomen verbunden sein können, um einen Ring zu bilden;
R3s gleich oder verschieden voneinander sind und jeweils unabhängig Wasserstoff; ein Halogenrest; ein Alkylrest mit 1 bis 20 Kohlenstoffatomen; ein Arylrest mit 6 bis 20 Kohlenstoffatomen; ein Alkoxyrest mit 1 bis 20 Kohlenstoffatomen; ein Aryloxyrest mit 6 bis 20 Kohlenstoffatomen; oder Amidorest sind; und wobei 2 oder mehr R3 miteinander verbunden sein können, um einen aliphatischen oder aromatischen Ring zu bilden;
CY1 ein substituierter oder unsubstituierter aliphatischer oder aromatischer Ring umfassend Stickstoff ist, bei welchem CY1 mit einem Halogenrest; einem Alkylrest mit 1 bis 20 Kohlenstoffatomen; einem Alkenylrest mit 2 bis 20 Kohlenstoffatomen; einem Arylrest mit 6 bis 20 Kohlenstoffatomen; einem Alkylarylrest mit 7 bis 20 Kohlenstoffatomen; einem Arylalkylrest mit 7 bis 20 Kohlenstoffatomen; einem Alkoxyrest mit 1 bis 20 Kohlenstoffatomen; einem Aryloxyrest mit 6 bis 20 Kohlenstoffatomen; oder einem Amidorest substituiert sein kann, und wobei in dem Fall, wo CY1 mit den mehreren Substituenten substituiert ist, zwei oder mehr Substituenten miteinander verbunden sein können, um einen aliphatischen oder aromatischen Ring zu bilden;
M ein Übergangsmetall der Gruppe 4 ist;
Q1 und Q2 gleich oder verschieden voneinander sind und jeweils unabhängig ein Halogenrest; ein Alkylrest mit 1 bis 20 Kohlenstoffatomen; ein Alkenylrest mit 2 bis 20 Kohlenstoffatomen; ein Arylrest mit 6 bis 20 Kohlenstoffatomen; ein Alkylarylrest mit 7 bis 20 Kohlenstoffatomen; ein Arylalkylrest mit 7 bis 20 Kohlenstoffatomen; ein Alkylamidorest mit 1 bis 20 Kohlenstoffatomen; ein Arylamidorest mit 6 bis 20 Kohlenstoffatomen; oder ein Alkylidenrest mit 1 bis 20 Kohlenstoffatomen ist,
[Formel 2] (CpR)ₙ(Cp'R')MQ₃₋ₙ,
wobei M ein Übergangsmetall der Gruppe 4 ist;
Cp und Cp' gleich oder verschieden voneinander sind und jeweils unabhängig irgendeiner ausgewählt aus der Gruppe bestehend aus Cyclopentadienyl-, Indenyl-, 4,5,6,7-Tetrahydro-1-indenyl- und Fluorenylresten sind, wobei diese mit Kohlenwasserstoff mit 1 bis 20 Kohlenstoffatomen substituiert sein können;
R und R' gleich oder verschieden voneinander sind und jeweils unabhängig Wasserstoff; Alkyl mit 1 bis 20 Kohlenstoffatomen; Alkoxy mit 1 bis 10 Kohlenstoffatomen; Aryl mit 6 bis 20 Kohlenstoffatomen; Aryloxy mit 6 bis 10 Kohlenstoffatomen; Alkenyl mit 2 bis 20 Kohlenstoffatomen; Alkylaryl mit 7 bis 40 Kohlenstoffatomen; Arylalkyl mit 7 bis 40 Kohlenstoffatomen; Arylalkenyl mit 8 bis 40 Kohlenstoffatomen; oder Alkinyl mit 2 bis 10 Kohlenstoffatomen sind;
Q ein Halogenatom; Alkyl mit 1 bis 20 Kohlenstoffatomen; Alkenyl mit 2 bis 10 Kohlenstoffatomen; Alkylaryl mit 7 bis 40 Kohlenstoffatomen; Arylalkyl mit 7 bis 40 Kohlenstoffatomen; Aryl mit 6 bis 20 Kohlenstoffatomen; ein substituiertes oder
unsubstituiertes Alkyliden mit 1 bis 20 Kohlenstoffatomen; eine substituierte oder unsubstituierte Aminogruppe; Alkylalkoxy mit 2 bis 20 Kohlenstoffatomen; oder Arylalkoxy mit 7 bis 40 Kohlenstoffatomen ist; und
n 1 oder 0 ist.

2. Verfahren zum Herstellen eines geträgerten Hybridmetallocenkatalysators nach Anspruch 1, wobei die Metallocenverbindung dargestellt durch Formel 1 eine Metallocenverbindung ist, die durch die folgende Formel 3 oder 4 dargestellt ist: 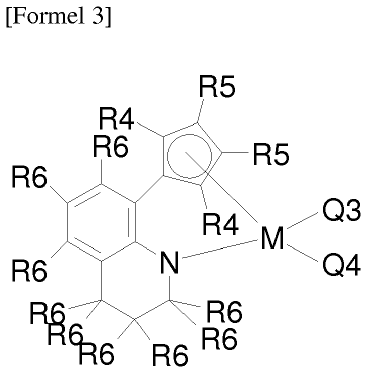 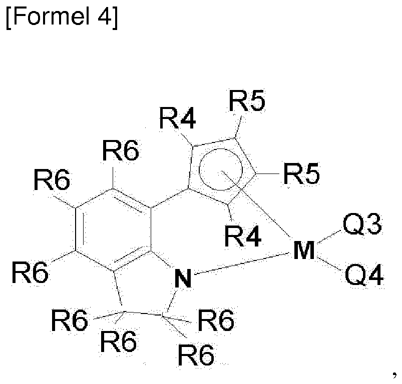 wobei R4 und R5 gleich oder unterschiedlich voneinander sind und unabhängig Wasserstoff; ein Alkylrest mit 1 bis 20 Kohlenstoffatomen; ein Arylrest mit 6 bis 20 Kohlenstoffatomen; oder ein Silylrest sind;
R6s gleich oder verschieden voneinander sind und jeweils unabhängig Wasserstoff; ein Alkylrest mit 1 bis 20 Kohlenstoffatomen; ein Alkenylrest mit 2 bis 20 Kohlenstoffatomen; ein Arylrest mit 6 bis 20 Kohlenstoffatomen; ein Alkylarylrest mit 7 bis 20 Kohlenstoffatomen; ein Arylalkylrest mit 7 bis 20 Kohlenstoffatomen; ein Alkoxyrest mit 1 bis 20 Kohlenstoffatomen; ein Aryloxyrest mit 6 bis 20 Kohlenstoffatomen; oder ein Amidorest sind; und wobei zwei oder mehr R6 miteinander verbunden sein können, um einen aliphatischen oder aromatischen Ring zu bilden;
Q3 und Q4 gleich oder verschieden voneinander sind und jeweils unabhängig ein Halogenrest; ein Alkylrest mit 1 bis 20 Kohlenstoffatomen; ein Alkylamidorest mit 1 bis 20 Kohlenstoffatomen; oder ein Arylamidorest mit 6 bis 20 Kohlenstoffatomen sind; und
M ein Übergangsmetall der Gruppe 4 ist.

3. Verfahren zum Herstellen eines geträgerten Hybridmetallocenkatalysators nach Anspruch 1, wobei die Metallocenverbindung dargestellt durch Formel 1 ausgewählt ist aus der Gruppe bestehend aus Metallocenverbindungen der folgenden Strukturen: 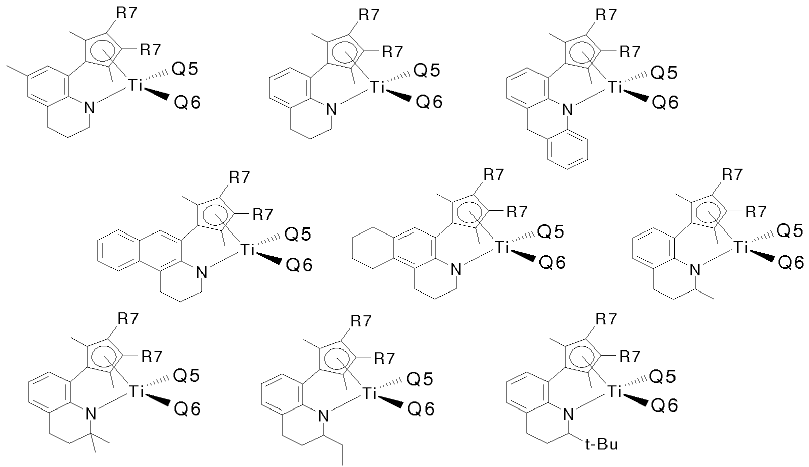 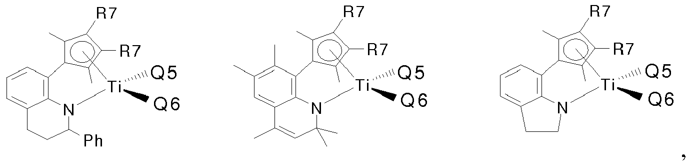 wobei R7s gleich oder verschieden voneinander sind und jeweils unabhängig ausgewählt sind aus Wasserstoff und einem Methylrest, und
Q5 und Q6 gleich oder verschieden voneinander sind und jeweils unabhängig ausgewählt sind aus einem Methylrest, einem Dimethylamidorest und einem Chloridrest.

4. Verfahren zum Herstellen eines geträgerten Hybridmetallocenkatalysators nach Anspruch 1, wobei die Metallocenverbindung dargestellt durch Formel 2 ausgewählt ist aus der Gruppe bestehend aus Metallocenverbindungen der folgenden Strukturen: 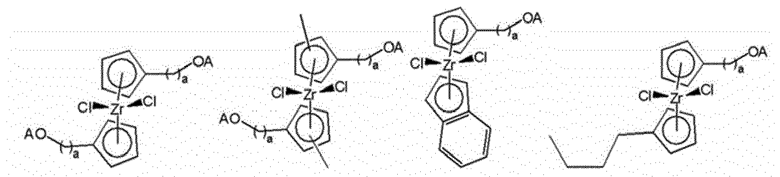 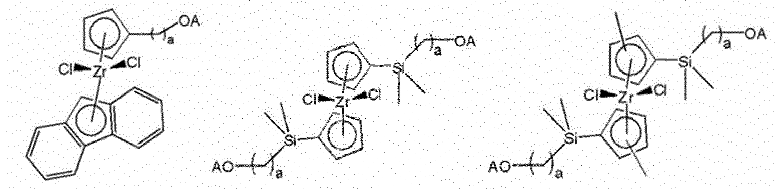 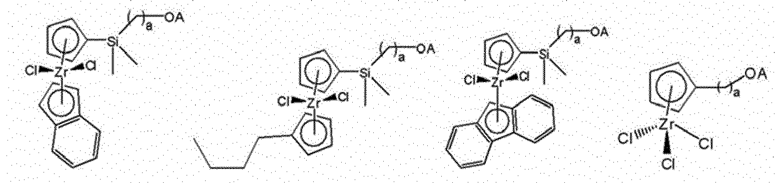 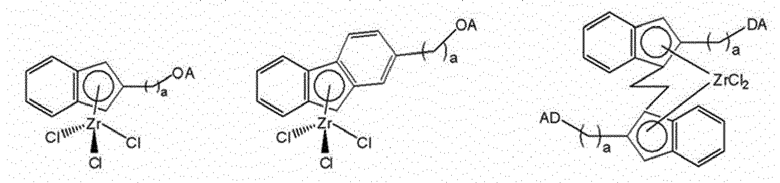 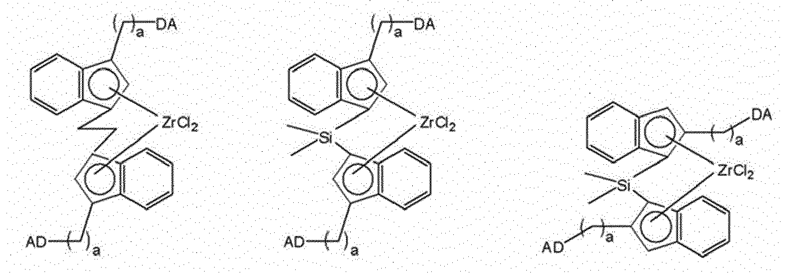 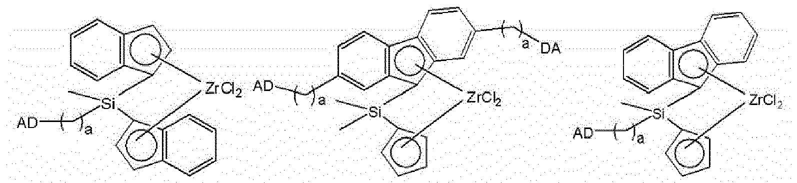 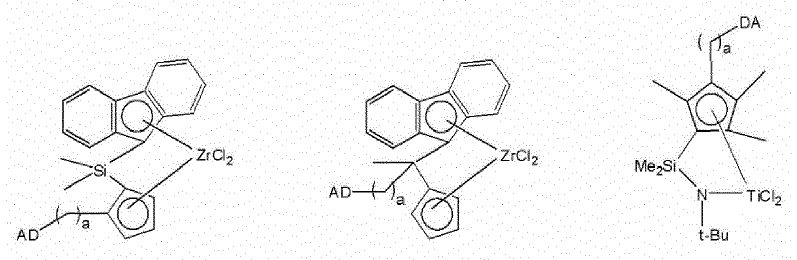 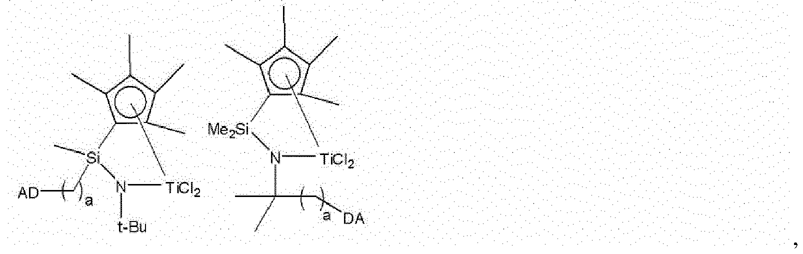 wobei a eine ganze Zahl von 4 bis 8 ist,
D ein Sauerstoff- oder Stickstoffatom ist,
A ausgewählt ist aus der Gruppe bestehend aus Wasserstoff, Alkyl mit 1 bis 20 Kohlenstoffatomen, Alkenyl mit 1 bis 20 Kohlenstoffatomen, Aryl, Alkylaryl, Arylalkyl, Alkylsilyl, Arylsilyl, Methoxymethyl, t-Butoxymethyl, Tetrahydropyranyl, Tetrahydrofuranyl, 1-Ethoxyethyl, 1-Methyl-1-methoxyethyl und t-Butyl.

5. Verfahren zum Herstellen eines geträgerten Hybridmetallocenkatalysators nach Anspruch 1, wobei die Cokatalysatorverbindung eine Verbindung umfasst, die durch die folgende Formel 6 dargestellt ist:
[Formel 6] -[Al(R8)-O]a-,
wobei R8s gleich oder verschieden voneinander sind und jeweils unabhängig ein Halogenrest; ein Kohlenwasserstoffrest mit 1 bis 20 Kohlenstoffatomen; oder ein Kohlenwasserstoffrest mit 1 bis 20 Kohlenstoffatomen, der mit Halogen substituiert ist, ist; und a eine ganze Zahl von 2 oder mehr ist.

6. Verfahren zum Herstellen eines geträgerten Hybridmetallocenkatalysators nach Anspruch 1, wobei das Gewichtsverhältnis der Übergangsmetalle der Metallocenverbindung dargestellt durch Formel 1 und der Metallocenverbindung dargestellt durch Formel 2 zu dem Träger 1 : 10 bis 1 : 1.000 ist.

7. Verfahren zum Herstellen eines geträgerten Hybridmetallocenkatalysators nach Anspruch 1, wobei das Gewichtsverhältnis der Cokatalysatorverbindung zum Träger 1 : 1 bis 1 : 100 ist.

8. Verfahren zum Herstellen eines geträgerten Hybridmetallocenkatalysators nach Anspruch 1, wobei das Gewichtsverhältnis der Metallocenverbindung dargestellt durch Formel 1 zu der Metallocenverbindung dargestellt durch Formel 2 1 : 0,01 bis 1 : 100 ist.

9. Verfahren zum Herstellen eines geträgerten Hybridmetallocenkatalysators nach Anspruch 1, wobei der Träger ausgewählt ist aus der Gruppe bestehend aus Siliziumoxid, Siliziumoxid-Aluminiumoxid und Siliziumoxid-Magnesiumoxid.

## Revendications

1. Procédé de préparation d'un catalyseur hybride métallocène supporté, comprenant les étapes suivantes consistant à :
1) préparer un support,
2) maintenir un composé co-catalyseur sur le support,
3) maintenir un composé métallocène représenté par la Formule 2 sur le support, et
4) maintenir un composé métallocène représenté par la Formule 1 sur le support: 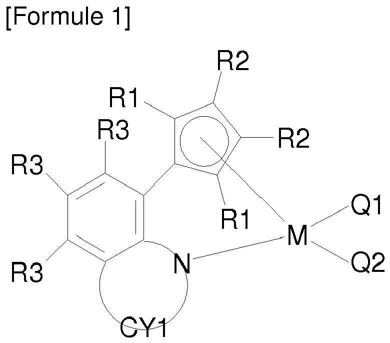
dans laquelle formule R1 et R2 sont identiques ou différents l'un de l'autre et représentent chacun indépendamment un hydrogène ; un radical alkyle portant 1 à 20 atome(s) de carbone ; et un radical alkényle portant 2 à 20 atomes de carbone ; un radical aryle portant 6 à 20 atomes de carbone ; un radical silyle ; un radical alkylaryle portant 7 à 20 atomes de carbone ; un radical arylalkyle portant 7 à 20 atomes de carbone ; ou un radical métalloïde du Groupe 4 substitué par un groupe hydrocarbyle ; R1 et R2 ou deux R2 peuvent être reliés l'un à l'autre par un radical alkylidène contenant un radical alkyle portant 1 à 20 atome(s) de carbone ou un radical aryle portant 6 à 20 atomes de carbone pour former un cycle ;
Les R3 sont identiques ou différents les uns des autres et représentent chacun indépendamment un hydrogène ; un radical halogène ; un radical alkyle portant 1 à 20 atome(s) de carbone ; un radical aryle portant 6 à 20 atomes de carbone ; un radical alcoxy portant 1 à 20 atome(s) de carbone ; un radical aryloxy portant 6 à 20 atomes de carbone ; ou un radical amido ; et deux R3 ou plus peuvent être reliés ensemble pour former un cycle aliphatique ou aromatique ;
CY1 est un cycle aliphatique ou aromatique substitué ou non substitué contenant de l'azote, dans lequel CY1 peut être substitué par un radical halogène ; un radical alkyle portant 1 à 20 atome(s) de carbone ; un radical alkényle portant 2 à 20 atomes de carbone ; un radical aryle portant 6 à 20 atomes de carbone ; un radical alkylaryle portant 7 à 20 atomes de carbone ; un radical arylalkyle portant 7 à 20 atomes de carbone ; un radical alcoxy portant 1 à 20 atome(s) de carbone ; un radical aryloxy portant 6 à 20 atomes de carbone ; ou un radical amido, et dans le cas où CY1 est substitué par plusieurs substituants, deux ou plusieurs substituants peuvent être reliés ensemble pour former un cycle aliphatique ou aromatique ;
M représente un métal de transition du Groupe 4 ;
Q1 et Q2 sont identiques ou différents l'un de l'autre et représentent chacun indépendamment un radical halogène ; un radical alkyle portant 1 à 20 atome(s) de carbone ; un radical alkényle portant 2 à 20 atomes de carbone ; un radical aryle portant 6 à 20 atomes de carbone ; un radical alkylaryle portant 7 à 20 atomes de carbone ; et un radical arylalkyle portant 7 à 20 atomes de carbone ; un radical alkyle amido portant 1 à 20 atome(s) de carbone ; un radical aryle amido portant 6 à 20 atomes de carbone ; ou un radical alkylidène portant 1 à 20 atome(s) de carbone,
[Formule 2] (CpR)ₙ(Cp'R')MQ₃₋ₙ
dans laquelle M représente un métal de transition du Groupe 4 ;
Cp and Cp' sont identiques ou différents l'un de l'autre et représentent chacun indépendamment l'un quelconque des composés sélectionné parmi le groupe constitué de cyclopentadiényle, d'indényle, de 4,5,6,7-tétrahydro-1-indényle et de radicaux fluorényle, dans lesquels ils peuvent être substitués par un hydrocarbure portant 1 à 20 atome(s) de carbone ;
R et R' sont identiques ou différents l'un de l'autre et représentent chacun indépendamment hydrogène ; alkyle portant 1 à 20 atome(s) de carbone ; alcoxy portant 1 à 10 atome(s) de carbone ; aryle portant 6 à 20 atomes de carbone ; aryloxy portant 6 à 10 atomes de carbone ; alkényle portant 2 à 20 atomes de carbone ; alkylaryle portant 7 à 40 atomes de carbone ; arylalkyle portant 7 à 40 atomes de carbone ; arylalkényle portant 8 à 40 atomes de carbone ; ou alkynyle portant 2 à 10 atomes de carbone ;
Q représente un atome d'halogène ; un alkyle portant 1 à 20 atome(s) de carbone ; un alkényle portant 2 à 10 atomes de carbone ; un alkylaryle portant 7 à 40 atomes de carbone ; un arylalkyle portant 7 à 40 atomes de carbone ; un aryle portant 6 à 20 atomes de carbone ; un alkylidène substitué ou non substitué portant 1 à 20 atome(s) de carbone ; un groupe amino substitué ou non substitué ; un alkylalkoxy portant 2 à 20 atomes de carbone ; ou un arylalkoxy portant 7 à 40 atomes de carbone ; et
n vaut 1 ou 0.

2. Procédé de préparation d'un catalyseur hybride métallocène supporté selon la revendication 1, dans lequel le composé de métallocène représenté par la Formule 1 est un composé métallocène représenté par la Formule 3 ou 4 suivante : 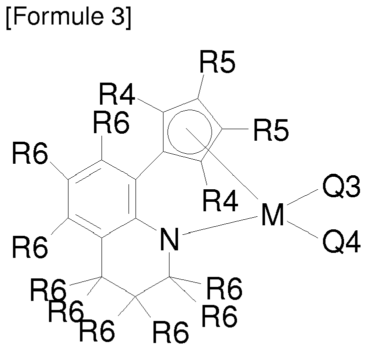 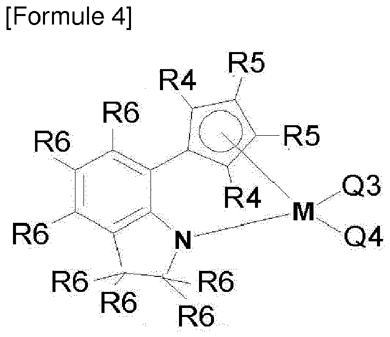 dans lesquelles formules R4 et R5 sont identiques ou différents les uns des autres et représentent chacun indépendamment un hydrogène ; un radical alkyle portant 1 à 20 atome(s) de carbone ; un radical aryle portant 6 à 20 atomes de carbone ; ou un radical silyle ;
les R6 sont identiques ou différents les uns des autres et représentent chacun indépendamment un hydrogène ; un radical alkyle portant 1 à 20 atome(s) de carbone ; un radical alkényle portant 2 à 20 atomes de carbone ; un radical aryle portant 6 à 20 atomes de carbone ; un radical alkylaryle portant 7 à 20 atomes de carbone ; un radical arylalkyle portant 7 à 20 atomes de carbone ; un radical alcoxy portant 1 à 20 atome(s) de carbone ; un radical aryloxy portant 6 à 20 atomes de carbone ; ou un radical amido ; et deux ou plusieurs des R6 peuvent être reliés ensemble pour former un cycle aliphatique ou aromatique ;
Q3 et Q4 sont identiques ou différents l'un de l'autre et représentent chacun indépendamment un radical halogène ; un radical alkyle portant 1 à 20 atome(s) de carbone ; un radical alkyle amido portant 1 à 20 atome(s) de carbone ; ou un radical aryle amido portant 6 à 20 atomes de carbone ; et
M représente un métal de transition du Groupe 4.

3. Procédé de préparation d'un catalyseur hybride métallocène supporté selon la revendication 1, dans lequel le composé de métallocène représenté par la Formule 1 est sélectionné parmi le groupe constitué de composés métallocène ayant les structures suivantes : 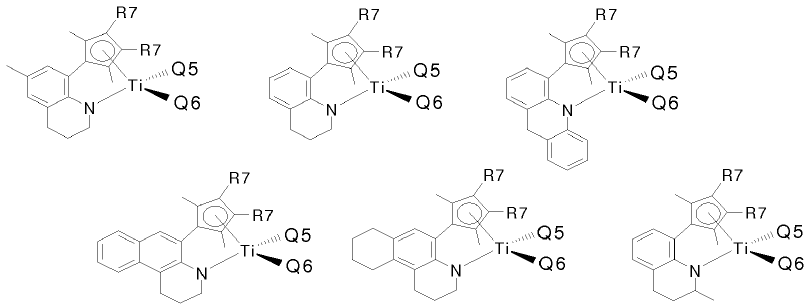 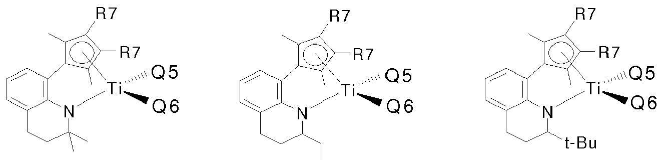 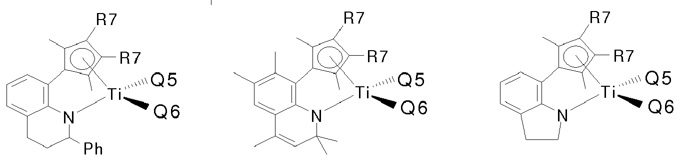 dans lesquelles structures les R7 sont identiques ou différents les uns des autres et sont chacun indépendamment sélectionnés parmi un hydrogène et un radical méthyle, et
Q5 et Q6 sont identiques ou différents l'un de l'autre et représentent chacun indépendamment sélectionnés parmi un radical méthyle, un radical diméthylamido et un radical chlorure.

4. Procédé de préparation d'un catalyseur hybride métallocène supporté selon la revendication 1, dans lequel le composé métallocène représenté par la Formule 2 est sélectionné parmi le groupe constitué de composés métallocène ayant les structures suivantes : 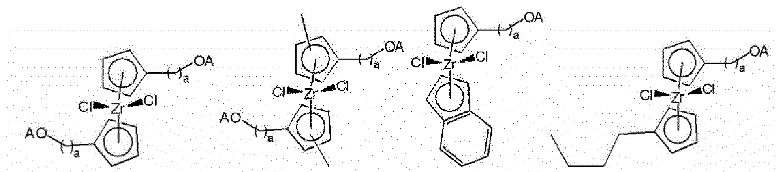 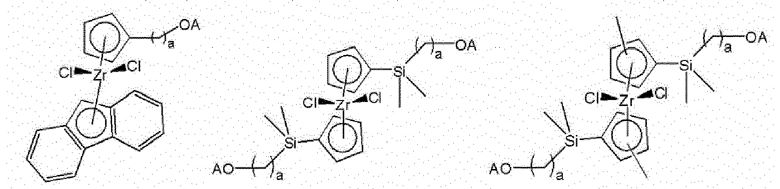 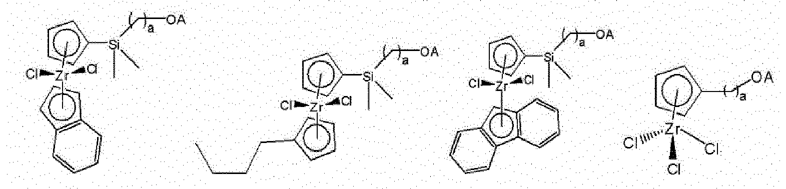 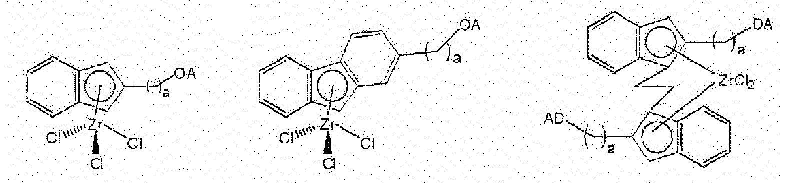 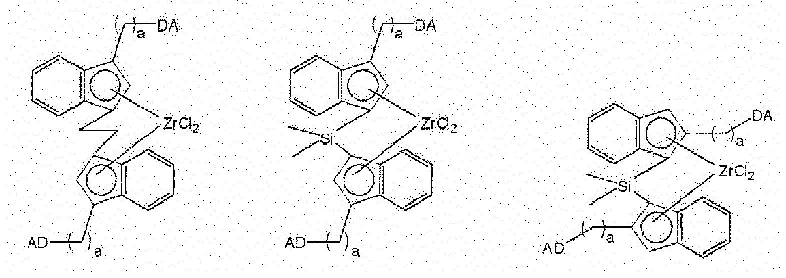 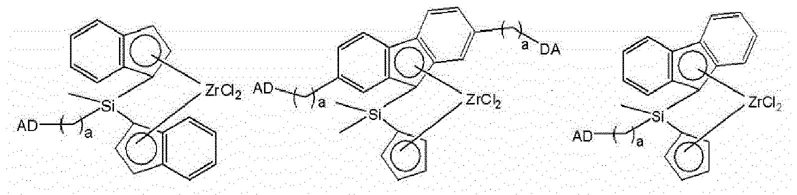 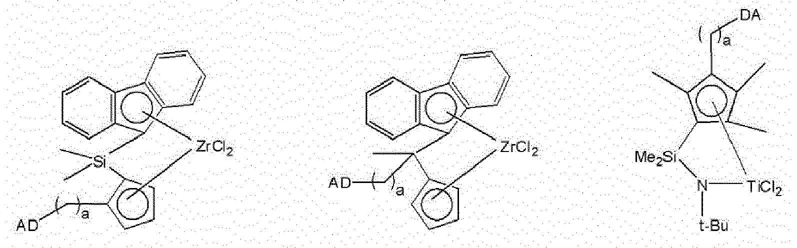 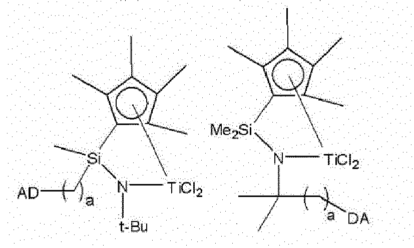 dans lesquelles structures a est un entier de 4 à 8,
D représente un atome d'oxygène ou d'azote,
A est sélectionné parmi le groupe constitué d'hydrogène, d'alkyle portant 1 à 20 atome(s) de carbone, d'alkényle portant 1 à 20 atome(s) de carbone, d'aryle, d'alkylaryle, d'arylalkyle, d'alkylsilyle, d'arylsilyle, de méthoxyméthyle, de t-butoxyméthyle, de tétrahydropyranyle, de tétrahydrofuranyle, de 1-éthoxyéthyle, de 1-méthyl-1-méthoxyéthyle et de t-butyle.

5. Procédé de préparation d'un catalyseur hybride métallocène supporté selon la revendication 1, dans lequel le composé co-catalyseur comprend un composé représenté par la Formula 6 suivante :
[Formule 6] -[AI(R8)-O]a-
dans laquelle formule les R8 sont identiques ou différents les uns des autres et représentent chacun indépendamment un radical halogène ; un radical hydrocarbyle portant 1 à 20 atome(s) de carbone ; ou un radical hydrocarbyle portant 1 à 20 atome(s) de carbone qui est substitué par un halogène ; et a est un entier qui valant 2 ou plus.

6. Procédé de préparation d'un catalyseur hybride métallocène supporté selon la revendication 1, dans lequel le rapport pondéral des métaux de transition du composé métallocène représenté par la Formule 1 et du composé métallocène représenté par la Formule 2 au support est de 1 : 10 à 1 : 1.000.

7. Procédé de préparation d'un catalyseur hybride métallocène supporté selon la revendication 1, dans lequel le rapport pondéral du composé co-catalyseur au support est de 1 : 1 à 1 : 100.

8. Procédé de préparation d'un catalyseur hybride métallocène supporté selon la revendication 1, dans lequel le rapport pondéral du composé métallocène représenté par la Formule 1 au composé métallocène représenté par la Formule 2 est de 1 : 0.01 à 1 : 100.

9. Procédé de préparation d'un catalyseur hybride métallocène supporté selon la revendication 1, dans lequel le support est sélectionné parmi le groupe constitué de silicium, silicium-alumine et silicium-magnésie.
